# EUROPÄISCHE PATENTSCHRIFT

(11) **EP 0 786 592 B1**
(45) Veröffentlichungstag und Bekanntmachung des Hinweises auf die Patenterteilung: **02.05.2002**
(21) Anmeldenummer: 96810054.5
(22) Anmeldetag: 29.01.1996
(51) Int. Cl.: F02M 45/02, F02D 41/40

(54) **Verfahren und Vorrichtung zum Einspritzen von Brennstoff bei einer Hubkolbenbrennkraftmaschine**
Method and apparatus for injecting fuel in an internal combustion piston engine
Méthode de dispositif d'injection de carburant dans un moteur à pistons à combustion interne

(43) Veröffentlichungstag der Anmeldung: 30.07.1997
(73) Patentinhaber: Wärtsilä Schweiz AG, 8401 Winterthur (CH)
(72) Erfinder: Schütz, Mathias, CH-8037 Zürich (CH)
(74) Vertreter: Sulzer Management AG

(56) Entgegenhaltungen:
- EP-A- 0 327 900
- DE-A- 3 802 161
- US-A- 5 165 373
- US-A- 5 280 773
- PATENT ABSTRACTS OF JAPAN vol. 009, no. 330 (M-442), 25.Dezember 1985 & JP-A-60 162034 (TOYOTA JIDOSHA KK), 23.August 1985,

## Beschreibung

Die Erfindung betrifft ein Verfahren zum Einspritzen von Brennstoff bei einer Hubkolbenbrennkraftmaschine gemäss dem Oberbegriff von Anspruch 1.

Aus der Offenlegungsschrift WO 94/18449 ist ein Verfahren zum Einspritzen von Brennstoff in den Brennraum einer Hubkolbenbrennkraftmaschine bekannt. Bei diesem Verfahren wird die Lage einer Nadel einer Einspritzdüse mittels eines Aktuators angesteuert. Dabei bleibt die Nadel während einem Einspritzzyklus ständig geöffnet, wobei die Lage der Nadel derart verschiebbar ist, dass die Brennstoffeinspritzrate steuerbar ist. Über eine dem Aktuator nachgeschaltete Regelvorrichtung ist die Lage der Nadel und dadurch die Brennstoffeinspritzrate derart veränderbar, dass eine Voreinspritzung mit einer anschliessenden Haupteinspritzung realisierbar ist. Ein Nachteil dieser bekannten Ausführungsform ist darin zu sehen, dass die Brennstoffeinspritzrate in Funktion der Zeit nur in engen Grenzen variierbar ist.

Aus der Druckschrift US 5,280,773 ist ein weiteres Verfahren sowie eine Vorrichtung zum Einspritzen von Brennstoff in den Brennraum einer Hubkolbenbrennkraftmaschine bekannt. Um im Verbrennungsraum eine homogenere Brennstoffmischung zu erzielen wird der Brennstoff derart in den Zylinder eingespritzt, dass die Eindringtiefe des Brennstoffs in den Verbrennungsraum sowie der Öffnungswinkel des einspritzenden Brennstoffstrahls beeinflussbar ist, indem der Brennstoff entsprechend einer Pulsweitenmodulation in Funktion der Zeit diskontinuierlich eingespritzt wird. Je eine Teilmenge Brennstoff wird in mehreren nacheinander folgenden Einspritzvorgängen dem Brennraum zugeführt, wobei die innerhalb eines Einspritzzyklus zugeführten Teilmengen Brennstoff zunehmend vergrössert werden. Mehrere Teilmengen Brennstoff werden derart eingespritzt, bis die gesamte für einen Einspritzzyklus vorgesehene Brennstoffmenge dem Brennraum zugeführt ist. Der Zeitunterschied zwischen dem jeweiligen Beginn des Einspritzens der Teilmengen Brennstoff bleibt immer konstant. Dieses Verfahren erlaubt die Emission von Kohlenwasserstoffen und Stickoxiden als auch von schwarzem Rauch zu reduzieren. Nachteilig an diesem bekannten Verfahren ist die Tatsache, dass Probleme beim Einspritzen des Brennstoffs auftreten und zudem der Wirkungsgrad nicht optimal ist.

Es ist Aufgabe der vorliegenden Erfindung ein verbessertes Einspritzverfahren sowie eine entsprechende Einspritzvorrichtung vorzuschlagen.

Diese Aufgabe wird gelöst mit einem Verfahren gemäss den Merkmalen von Anspruch 1. Die Unteransprüche 2 bis 6 beziehen sich auf weitere, vorteilhafte Ausgestaltungen des erfindungsgemässen Verfahrens.

Die Aufgabe wird insbesondere gelöst mit einem Verfahren zum Einspritzen von Brennstoff in den Brennraum einer Hubkolbenbrennkraftmaschine bei welchem während jeweils einem Einspritzzyklus das Einspritzen des Brennstoffs mehrmals vollständig unterbrochen und anschliessend wieder aufgenommen wird und somit durch dieses Einspritzverfahren mehrmals nacheinander eine zunehmend grössere Teilmenge Brennstoff eingespritzt wird, bis die gesamte für einen Einspritzzyklus vorgesehene Brennstoffmenge eingespritzt ist, wobei während einem Einspritzzyklus das Einspritzen von Brennstoff entsprechend einer Pulsweitenmodulation (PWM) angesteuert wird, und wobei die Länge des Unterbruchs zwischen dem Einspritzen je einer Teilmenge Brennstoff konstant gehalten wird. Dieses Verfahren eignet sich insbesondere für Hubkolbenbrennkraftmaschinen der Dieselbauart, insbesondere langsamlaufende Dieselmotoren.

Als Einspritzzyklus wird im folgenden der Vorgang des Einspritzens von Brennstoff in den Zylinderraum eines Zylinders bezeichnet, derart, dass die gesamte für einen einzigen Verbrennungszyklus erforderliche Brennstoffmenge eingespritzt wird. Das erfindungsgemässe Verfahren eignet sich insbesondere für selbstzündende, langsamlaufende Hubkolbenbrennkraftmaschinen der Dieselbauart. Nach jedem abgeschlossenen Verbrennungsvorgang beginnt der Einspritzzyklus von neuem. Während jeweils einem Einspritz- und Verbrennungszyklus wird mit dem erfindungsgemässen Verfahren der Brennstoff derart in den Zylinderraum eingespritzt, dass die Brennstoffzufuhr mehrmals unterbrochen wird und der Brennstoff in Teilmengen eingespritzt wird. Dieses Verfahren läuft jeweils innerhalb eines einzigen Einspritz- und Verbrennungszyklus einer 2-Takt-Hubkolbenbrennkraftmaschine oder einer 4-Takt-Hubkolbenbrennkraftmaschine ab. Ein Vorteil des erfindungsgemässen Verfahrens ist darin zu sehen, dass die auf Grund der Verbrennung im Zylinderraum auftretende Wärmeentwicklungsrate durch die jeweils eingespritzte Brennstoffmenge in Funktion der Zeit bzw. in Funktion des Kurbelwellenwinkels steuerbar ist. Die Brennstoffeinspritzung wird durch eine Pulsweitenmodulation moduliert, in dem die Zeitdauer einer Brennstoffzufuhr mit Hilfe einer Regelvorrichtung moduliert werden. Vorteilhafterweise wird während einem Einspritzzyklus drei bis fünf Mal Brennstoff zugeführt und die Brennstoffzufuhr anschliessend wieder unterbrochen. In einem vorteilhaften Betrieb wird die Brennstoffzufuhr derart moduliert, dass sich im Verbrennungsraum eine ungefähr linear ansteigende Wärmeentwicklungsrate in Funktion des Kurbelwellenwinkels ergibt. Ein Vorteil einer derartigen Wärmeentwicklungsrate ist darin zu sehen, dass sich ein hoher Wirkungsgrad mit entsprechend tiefem Brennstoffverbrauch ergibt.

Die Erfindung wird weiter an Hand von mehreren Ausführungsbeispielen beschrieben. Es zeigen:
- Fig. 1: Eine Einspritzvorrichtung mit Einspritzdüsen und Zylinder;
- Fig. 2: eine Einspritzvorrichtung;
- Fig. 3: ein Beispiel einer Einspritzung von Brennstoff in Funktion des Kurbelwellenwinkels;
- Fig. 4: ein Beispiel einer idealisierten Wärmeentwicklung im Verbrennungsraum in Funktion des Kurbelwellenwinkels.

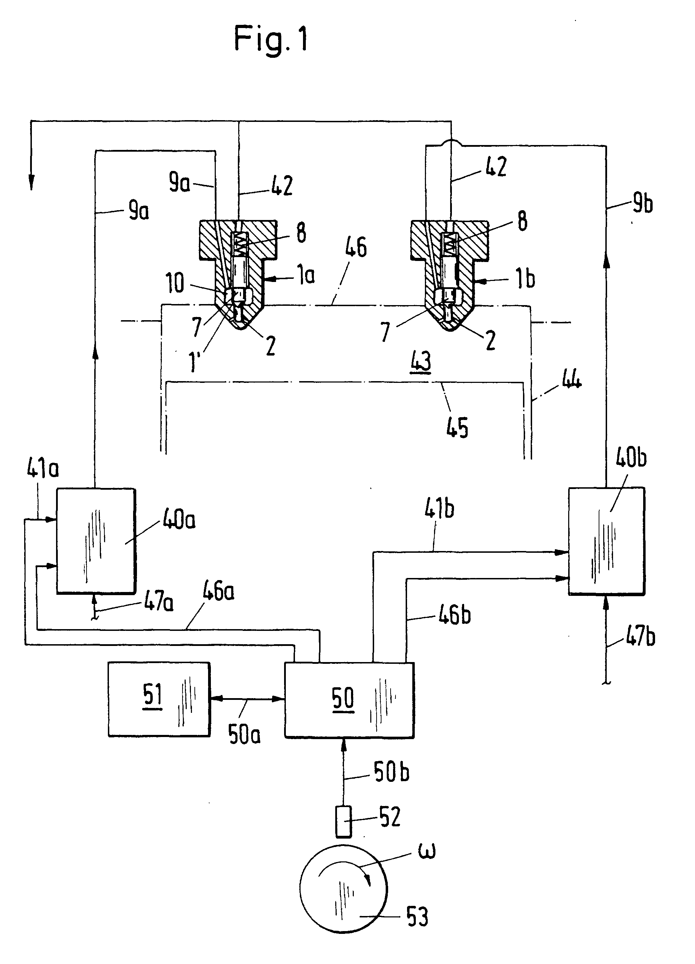

Von einer nicht näher dargestellten mehrzylindrigen, langsamlaufenden 2-Takt-Hubkolbenbrennkraftmaschine, die nach dem Diesel-Verfahren betrieben wird, ist in Fig. 1 ein Zylinder 44 angedeutet, in welchem ein Arbeitskolben 45 auf- und abbeweglich geführt ist. Der Arbeitskolben 45 begrenzt zusammen mit einem auf den Zylinder 44 aufgesetzten Zylinderdeckel 46 einen Brennraum 43, in den mittels einer ersten Einspritzdüse 1a und einer zweiten Einspritzdüse 1b flüssiger Brennstoff eingespritzt wird. Im Zentrum des Zylinderdeckels 46 ist ein nicht dargestelltes Auslassventil angeordnet, sodass im Zylinder 44 zu Beginn der Aufwärtsbewegung des Arbeitskolbens 45 eine Längsspülung auftritt. Die erste Einspritzdüse 1a sowie die zweite Einspritzdüse 1b von an sich bekannter Bauart weisen je eine Düsennadel 7 auf, die unter der Wirkung einer Schliessfeder 8 gegen eine Sitzfläche 1' gedrückt wird. Unterhalb der Sitzfläche 1' ist im Düsengehäuse ein Sackloch angeordnet, von welchem Spritzlöcher 2 ausgehen, die in den Brennraum 43 münden. Oberhalb der Sitzfläche 1' ist im Düsengehäuse eine Druckkammer 10 angeordnet, die über eine Druckleitung 9a,9b mit einer Einspritzvorrichtung 40a,40b verbunden ist. Während der Einspritzphase der Einspritzdüse 1a,1b ist der Druck des über die Leitung 9a,9b der Druckkammer 10 zugeführten Brennstoffes so hoch, dass die Anpresskraft der Feder 8 überwunden wird und die Düsennadel 7 von der Sitzfläche 1' abgehoben wird, so dass der Brennstoff über die Spritzlöcher 2 in den Brennraum 43 gelangt. Am Gehäuse der Einspritzdüse 1a, 1b ist eine Leitung 42 angeschlossen, welche zum Abführen von Leckbrennstoff dient. Die Einspritzvorrichtungen 40a, 40b sind derart ausgestaltet, dass der Beginn und das Ende einer Brennstoffeinspritzung über elektrische Steuerleitungen 41a,41b ansteuerbar sind. Die Einspritzvorrichtung 40a, 40b kann zudem derart ausgestaltet sein, dass auch die Menge des einzuspritzenden Brennstoffes über eine elektrische Steuerleitung 46a, 46b ansteuerbar ist. Die Einspritzvorrichtungen 40a, 40b sind beide mit je einer Brennstoffzuleitung 47a, 47b verbunden. Eine Regelvorrichtung 50 steuert über die Steuerleitungen 41a, 41b und über ev. weiter vorhandene Steuerleitungen 46a, 46b die Einspritzvorrichtungen 40a, 40b und damit das Öffnen und Schliessen der Ventile 1a, 1b. Die Regelvorrichtung 50 ist über eine elektrische Signalleitung 50b mit einem Sensor 52 verbunden, welcher den Drehwinkel ω der Kurbelwellen 53 der Hubkolbenbrennkraftmaschine überwacht. Weiter ist die Regelvorrichtung 50 über eine elektrische Signalleitung 50a mit einer Ein- und Ausgabevorrichtung 51 verbunden, mit welcher Steuerwerte vorgebbar sind und Zustandswerte anzeigbar sind. Die Regelvorrichtung 50 kann mit weiteren nicht dargestellten Sensoren zur Erfassung von Zustandsgrössen verbunden sein. Die Einspritzvorrichtung 40a, 40b weist ein hohes dynamisches Verhalten auf, kann doch die Brennstoffeinspritzung während einem Einspritzzyklus mehrmals unterbrochen und wieder aufgenommen werden, wobei die Einspritzvorrichtung 40a, 40b dem durch die Regelvorrichtung 50 vorgegebenen Modulationssignal folgt. Die beiden Einspritzdüsen 1a,1b können von der Regelvorrichtung 50 zeitlich synchron als auch zeitlich versetzt angesteuert werden, beziehungsweise bezüglich dem Kurbelwellenwinkel ω versetzt angesteuert werden.

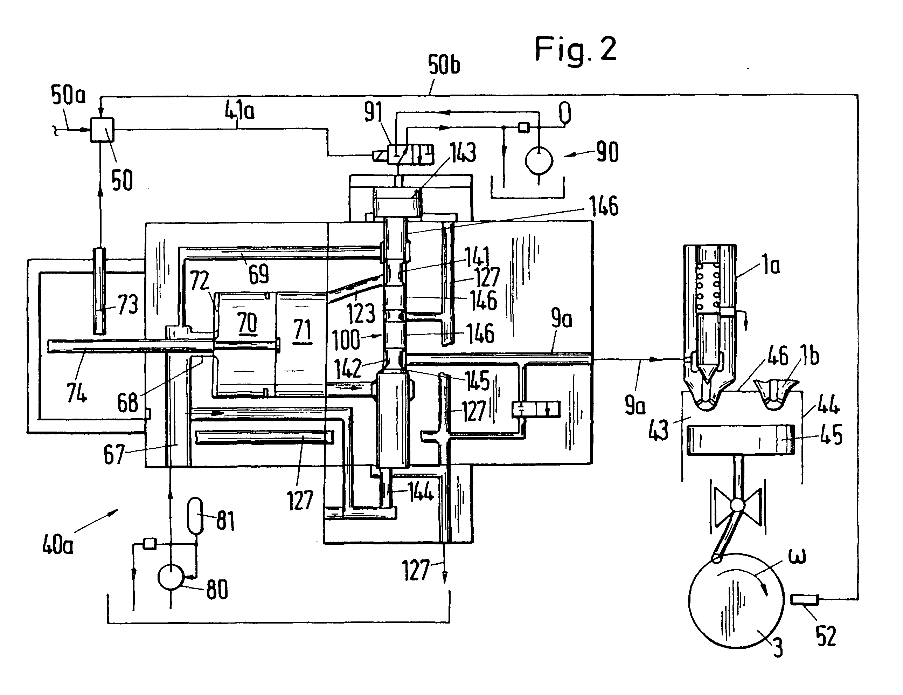

Fig. 2 zeigt schematisch und teilweise in einem Schnitt ein Ausführungsbeispiel einer Einspritzvorrichtung 40a, welche von einer Hochdruckpumpe 80 und einem Akkumulator 81 mit Brennstoff beschickt wird. Der Eingangskanal 67 für den Brennstoff verzweigt sich in den Kanal 68 zur Rückseite des als Differenzkolben ausgebildeten Dosierkolbens 70 und in den Hauptkanal 69, mit dem Brennstoff über die Nute 141 des Steuerkolbens 100 zum Eingangskanalabschnitt 123 geführt wird. Bei Betätigung des Steuerventils 91 der Steuerhydraulik 90, das einen Zulauf und einen Rücklauf mit Steueröl aufweist, das unter Druck steht, wird die Stirnseite 143 des Steuerkolbens 100 nach unten bewegt. Das Vorsteuerventil erhält seine Steuerbefehle von der Regelelektronik 50, welche dafür sorgt, dass der Brennstoffeinspritzvorgang im richtigen Zeitpunkt und mit der richtigen Menge erfolgt. So werden beispielsweise von einem bei der Kurbelwelle 3 angeordneten Sensor 52 die Winkelsignale über eine elektrische Verbindung 50b der Regelvorrichtung 50 übermittelt. Ein Geber 73, der beispielsweise induktiv arbeitet, gibt durch überwachen der Lage der Welle 74 an die Regelelektronik 50 Signale über die Position des Dosierkolbens 70 ab. Damit wird es möglich, die Einspritzmenge des Brennstoffs pro Einspritzvorgang zu bestimmen und zu verändern.
Während sich der Steuerkolben 100 nach unten bewegt, wird zunächst die Verbindung zwischen dem Hauptkanal 69 und dem Eingangskanalabschnitt 123 unterbrochen. Danach wird über die Nute 142 im,Steuerkolben 100 der Ausgangskanal 124 mit dem Einspritzkanal 9a, der zur Einspritzdüse 1a des Zylinders 44 des Dieselmotors führt, verbunden. Der Dosierkolben 70 wird durch den vom Brennstoff über den Kanals 68 auf die Rückseite 72 des Dosierkolbens ausgeübten Druck bewegt. Der Brennstoff wird in den Zylinderraum 43 eingespritzt. Wird das Vorsteuerventil 91 geschlossen und der Rücklauf für das Steueröl geöffnet, so wird der Steuerkolben 100 durch den auf die Stirnfläche 144 des Steuerkolbens 100 wirkenden Brennstoffdruck und die Federkraft nach oben gedrückt. Die Brennstoffzufuhr zum Kanal 9a wird unterbrochen und somit die Brennstoffeinspritzung beendet. Dieser Vorgang kann während einem Einspritzzyklus mehrmals wiederholt werden. In Fig. 2 ist eine zweite in den Brennraum 43 mündende Einspritzdüse 1b nur andeutungsweise dargestellt. Diese Einspritzdüse 1b wird von einer weiteren, zur Einspritzvorrichtung 40a identischen, aber nicht dargestellten Einspritzvorrichtung 40b mit Brennstoff versorgt.

Am Steuerkolben 100 dichten beispielsweise fünf Dichtstellen dauernd gegen den sich unter Hochdruck befindlichen Brennstoff. Die wichtigste Dichtstelle, nämlich diejenige mit der Verbindung zur Einspritzdüse 1a, ist als Sitzventil 145 ausgebildet, damit zwischen den einzelnen Einspritzvorgängen die Leitung 9a nicht unter Druck gesetzt wird. Der Ventilsitz 145 ist im geschlossenen Zustand ganz dicht. Damit kann unkontrolliertes Einspritzen verhindert werden. Bei den anderen Dichtungen 146 wird die enge Passung des Steuerkolbens 100 ausgenützt und ein kleiner Leckstrom des Brennstoffs in Kauf genommen und über die Rückführkanäle 127 wieder in den Treibstofftank rückgeführt.

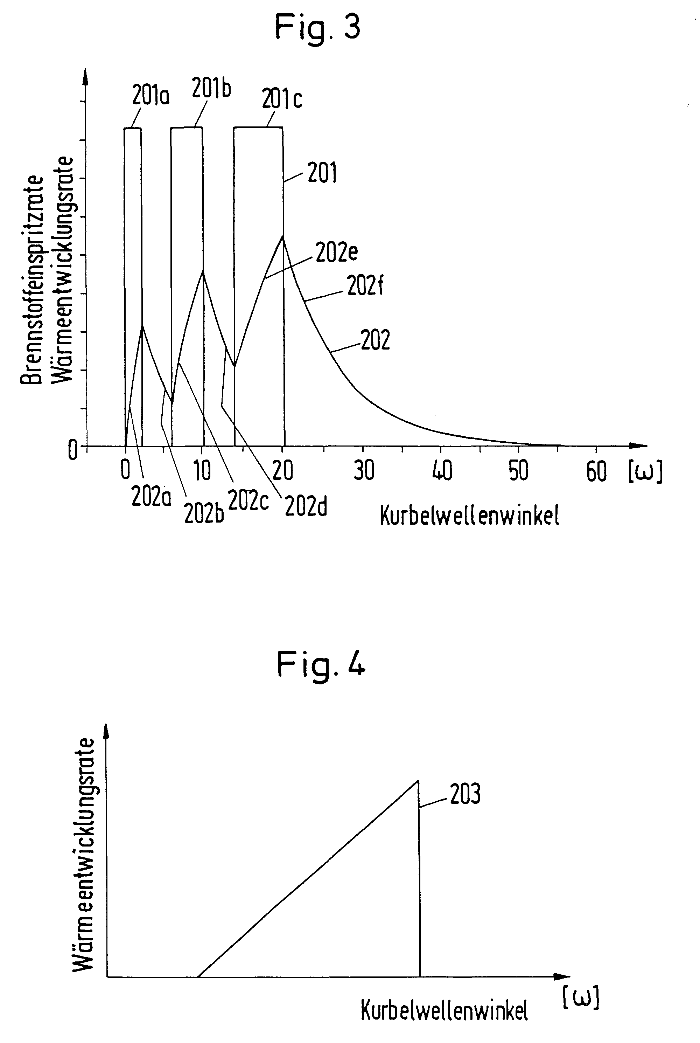

Fig. 3 zeigt einen Einspritzvorgang während einem Einspritzzyklus. Auf der Abszisse ist der Winkel ω der Kurbelwelle der Hubkolbenbrennkraftmaschine dargestellt. Die Kurve 201 zeigt die Brennstoffeinspritzrate in Funktion des Kurbelwellenwinkels ω, wobei der Verlauf der Kurve 201 zum besseren Verständnis idealisiert dargestellt ist. In Wirklichkeit weist der Verlauf der Kurve 201, bedingt durch die Trägheit der Brennstoffeinspritzvorrichtung sowie des fliessenden Brennstoffs, nicht einen rechteckigen Verlauf auf sondern zeigt insbesondere an den Knickpunkten ein Einschwingverhalten bzw. ein Ausschwingverhalten. Einem Fachmann ist bekannt, dass ein rechteckförmiges Signal, insbesondere ein mittels einer Pulsweitenmodulation moduliertes Signal, an den Knickpunkten ein Schwingungsverhalten aufweist. Der Brennstoff wird derart eingespritzt, dass in einer ersten Phase 201a während einem Kurbelwellenwinkel entsprechend der Breite der Phase 201a Brennstoff in den Zylinderraum 43 eingespritzt wird, danach die Brennstoffzufuhr vollständig unterbrochen wird, bis mit Beginn der Phase 201b von neuem Brennstoff eingespritzt wird, welche ihrerseits wieder unterbrochen wird. Nach einer nachfolgenden, dritten Phase 201c wird der Einspritzvorgang beendet. Im dargestellten Beispiel wird die Brennstoffeinspritzrate pro Grad Kurbelwellenwinkel konstant gehalten wobei während einem Kurbelwellenwinkel von insgesamt 20 Grad in drei Phasen 201a,201b,201c Brennstoff eingespritzt wird. Moduliert wird die Breite der Phasen 201a,201b,201c, wogegen die Länge des Unterbruches zwischen den einzelnen Phasen einen bezüglich dem Kurbelwellenwinkel konstanten Wert aufweist. Weiter ist in Fig. 3 der Verlauf der während der Verbrennung des Brennstoffes im Zylinderraum auftretenden Wärmeentwicklungsrate 202 in Funktion des Kurbelwellenwinkels ω dargestellt. Bereits in der ersten Einspritzphase 201a wird der Brennstoff im Zylinderraum gezündet und es resultiert eine Wärmeentwicklungsrate entsprechend dem Kurvenverlauf 202a, an welche sich nach dem Unterbruch der Brennstoffeinspritzung eine Wärmeentwicklungsrate entsprechend dem Kurvenverlauf 202b anschliesst. Die folgende Einspritzphase 201b bewirkt eine Wärmeentwicklungsrate entsprechend dem Kurvenverlauf 202c und 202d. Die letzte Einspritzphase 201c bewirkt eine Wärmeentwicklungsrate entsprechend dem Kurvenverlauf 202e und 202f. Aus dem Zusammenwirken des Verlaufes der Brennstoffeinspritzrate 201 mit dem Verlauf der Wärmeentwicklungsrate 202 ist ersichtlich, dass durch eine entsprechende Modulation der Brennstoffeinspritzung 201 der Verlauf der Wärmeentwicklungsrate 202 in einem weiten Bereich beeinflusst werden kann.

Bei einer Hubkolbenbrennkraftmaschine der Dieselbauart wird ein optimaler Wirkungsgrad durch eine isobare Verbrennung erreicht. Fig. 4 zeigt eine isobare Wärmeentwicklungrate 203 in Funktion des Kurbelwellenwinkels ω. Ein derart idealisierter Verlauf der Wärmeentwicklung ist in realen Hubkolbenbrennkraftmaschine nicht erzielbar. Das erfindungsgemässe Einspritzverfahren erlaubt jedoch diesen Verlauf annähernd zu erreichen, wie aus Fig. 3 mit der Wärmeentwicklungsrate 202 ersichtlich ist. Der Verlauf der Wärmeentwicklungsrate 202 entspricht einem etwa dreieckförmigen Verlauf mit überlagerten, sägezahnförmigen Anteilen. Um diese überlagerten Anteile zu glätten kann die Anzahl der Einspritzphasen 201a,201b,201c erhöht werden, sodass über einem Bereich des Kurbelwellenwinkels von total 20 Grad beispielsweise fünf einzelne Einspritzungen ausgeführt werden. Dies hat zur Folge, dass die Welligkeit der Wärmeentwicklungsrate 202 reduziert wird.

In einem vorteilhaften Verfahrensablauf wird derart Brennstoff zugeführt, dass 50% der einzuspritzenden Brennstoffmenge während den ersten 66% der gesamten Einspritzdauer eingespritzt wird.

Die Brennstoffeinspritzrate lässt sich derart modulieren, dass die einzelnen Einspritzphasen 201a,201b,201c in ihrer Breite moduliert werden. Eine derartige Modulation wird als eine Pulsweitenmodulation (PWM) bezeichnet. Weiter ist es möglich die Brennstoffeinspritzrate mit einer Pulsamplitudenmodulation (PAM) zu modulieren indem die Amplitude der Brennstoffeinspritzrate 201 nicht konstant gehalten wird, wie in Fig. 3 dargestellt, sondern über die Einspritzvorrichtung 40a,40b moduliert wird. Weiter kann die Brennstoffeinspritzrate 201 derart moduliert werden, dass sowohl die Weite als auch die Amplitude der Pulse moduliert wird, das heisst eine Kombination von Pulsweitenmodulation (PWM) und Pulsamplitudenmodulation (PAM) eingesetzt wird.

## Patentansprüche

1. Verfahren zum Einspritzen von Brennstoff in den Brennraum einer Hubkolbenbrennkraftmaschine, wobei während jeweils einem Einspritzzyklus das Einspritzen von Brennstoff mehrmals vollständig unterbrochen und wieder aufgenommen wird und derart mehrmals nacheinander eine zunehmend grössere Teilmenge Brennstoff eingespritzt wird, bis die gesamte für einen Einspritzzyklus vorgesehene Brennstoffmenge eingespritzt ist, und wobei während einem Einspritzzyklus das Einspritzen von Brennstoff entsprechend einer Pulsweitenmodulation (PWM) angesteuert wird, **dadurch gekennzeichnet, dass** die Länge des Unterbruchs zwischen dem Einspritzen je einer Teilmenge Brennstoff konstant gehalten wird.

2. Verfahren nach Anspruch 1, **dadurch gekennzeichnet, dass** das Einspritzen von Brennstoff zudem mit einer Pulsamplitudenmodulation (PAM) angesteuert wird.

3. Verfahren nach einem der Ansprüche 1 oder 2, **dadurch gekennzeichnet, dass** mit einer Regelvorrichtung (50) ein Drehwinkel ω einer Kurbelwelle (53) der Hubkolbenbrennkraftmaschine erfasst wird, und dass die Regelvorrichtung (50) eine Einspritzvorrichtung (40a,40b) derart ansteuert, dass über jeweils einem Einspritzzyklus die einzuspritzende Brennstoffmenge in Funktion des Kurbelwellenwinkels ω vorgebbar ist.

4. Verfahren nach einem der Ansprüche 1 bis 3, **dadurch gekennzeichnet, dass** die Brennstoffmenge derart in Abhängigkeit des Kurbelwellenwinkels ω eingespritzt wird, dass im Brennraum während einem Verbrennungszyklus eine in Funktion des Kurbelwellenwinkels ω ungefähr linear ansteigende Wärmeentwicklung auftritt.

5. Verfahren nach einem der Ansprüche 1 bis 4, **dadurch gekennzeichnet, dass** während einem Einspritzzyklus mindestens dreimal nacheinander Brennstoff eingespritzt wird.

6. Verfahren nach einem der Ansprüche 1 bis 5, **dadurch gekennzeichnet, dass** 50% der einzuspritzenden Brennstoffmenge während den ersten 66% der gesamten Einspritzdauer eingespritzt wird.

## Claims

1. Method for the injection of fuel into the combustion chamber of a reciprocating piston combustion engine wherein the injection of fuel is in each case completely interrupted and resumed a plurality of times during a single injection cycle, and thus in this way an increasingly larger partial amount of fuel is injected a plurality of times in succession until the entire amount of fuel provided for an injection cycle has been injected, **characterised in that** the length of the interruption between the injection of each partial quantity of fuel is held constant, **characterised in that** the length of the interruption between the injection of each partial quantity of fuel is held constant.

2. Method in accordance with one of the claims 1 **characterised in that** the injection of fuel is moreover controlled in accordance with a pulse amplitude modulation (PAM).

3. Method in accordance with one of the claims 1 or 2 **characterised in that** a rotation angle w of the crankshaft (53) of the reciprocating piston combustion engine is measured with a control device (50); and **in that** the control device (50) controls an injection device (40a, 40b) in such a manner that during each single injection cycle the amount of fuel to be injected can be prespecified as a function of the crankshaft angle w.

4. Method in accordance with one of the claims 1 to 3 **characterised in that** the amount of fuel injected is dependent on the crankshaft angle ω in such a manner that an approximately linearly increasing heat development occurs in the combustion chamber during a combustion cycle as a function of the crankshaft angle w.

5. Method in accordance with one of the claims 1 to 4 **characterised in that** fuel is injected at least three times in succession during one injection cycle.

6. Method in accordance with one of the claims 1 to 5 **characterised in that** 50% of the fuel to be injected is injected during the first 66% of the total duration of the injection.

## Revendications

1. Procédé d'injection de combustible dans l'enceinte de combustion d'un moteur à pistons à combustion interne, ou pendant respectivement un cycle d'injection, l'injection du combustible est interrompue plusieurs fois complètement et ensuite reprise et que plusieurs fois successivement une quantité partielle de plus en plus grande de combustible est injectée jusqu'à ce que la quantité de combustible totale, prévue pour un cycle d'injection, soit injectée, et où pendant un cycle d'injection, l'injection du combustible est commandée conformément à une modulation de largeur d'impulsion (PWM), **caractérisé en ce que** la longueur de l'interruption entre l'injection respectivement d'une quantité partielle de combustible, est maintenue constante.

2. Procédé selon la revendication 1, **caractérisé en ce que** l'injection du combustible est de plus commandée par une modulation d'amplitude d'impulsion (PAM).

3. Procédé selon l'une des revendications 1 ou 2, **caractérisé en ce qu'**au moyen d'un dispositif de réglage (50), un angle de rotation ω d'un arbre à manivelle (53) du moteur à pistons à combustion interne est détecté, et **en ce que** le dispositif de réglage (50) commande un dispositif d'injection (40a, 40b) de telle sorte que sur respectivement un cycle d'injection, la quantité de combustible à injecter puisse être prédéfinie en fonction de l'angle de l'arbre à manivelle ω.

4. Procédé selon l'une des revendications 1 à 3, **caractérisé en ce que** la quantité de combustible est injectée de telle sorte en fonction de l'angle de l'arbre à manivelle ω qu'il se produit dans l'enceinte de combustion pendant un cycle de combustion, un développement de chaleur augmentant approximativement linéairement en fonction de l'angle de l'arbre à manivelle ω.

5. Procédé selon l'une des revendications 1 à 4, **caractérisé en ce que** pendant un cycle d'injection, le combustible est injecté au moins trois fois successivement.

6. Procédé selon l'une des revendications 1 à 5, **caractérisé en ce que** 50% de la quantité de combustible à injecter sont injectés pendant les premiers 66% de la durée d'injection totale.
